(19) Europäisches Patentamt
European Patent Office
Office européen des brevets

(11) EP 1 882 003 B1

(12) **EUROPÄISCHE PATENTSCHRIFT**

(45) Veröffentlichungstag und Bekanntmachung des Hinweises auf die Patenterteilung:
**27.05.2009 Patentblatt 2009/22**

(21) Anmeldenummer: **06742350.9**

(22) Anmeldetag: **17.05.2006**

(51) Int Cl.:
***C08J 3/03*** *(2006.01)*

(86) Internationale Anmeldenummer:
**PCT/DE2006/000842**

(87) Internationale Veröffentlichungsnummer:
**WO 2006/122530 (23.11.2006 Gazette 2006/47)**

(54) **VERFAHREN ZUR EFFIZIENZSTEIGERUNG VON TENSIDEN, ZUR UNTERDRÜCKUNG LAMELLARER MESOPHASEN, ZU TEMPERATURSTABILISIERUNG DES EINPHASENGEBIETES SOWIE EIN VERFAHREN ZUR VERMINDERUNG DER GRENZFLÄCHENSPANNUNG IN MIKROEMULSIONEN, WELCHE SILICONÖLE ENTHALTEN, MITTELS ADDITIVEN SOWIE TENSID-ÖLGEMISCH**

METHOD FOR IMPROVING EFFICACY OF SURFACTANTS PREVENTION OF LAMELLAR MESOPHASES TEMPERATURE STABILIZATION OF THE SINGLE PHASE REGION AND A METHOD FOR REDUCING BOUNDARY SURFACE TENSION IN MICRO-EMULSIONS CONTAINING SILICONE OILS BY MEANS OF ADDITIVES AND SURFACTANT/OIL MIXTURES

PROCEDE D'AUGMENTATION DE L'EFFICACITE DE TENSIOACTIFS POUR SUPPRIMER DES MESOPHASES LAMELLAIRES ET STABILISER LA TEMPERATURE DE LA ZONE MONOPHASE, PROCEDE DE REDUCTION DE LA TENSION INTERFACIALE DES MICROEMULSIONS CONTENANT DES HUILES DE SILICONE A L'AIDE D'ADDITIFS, ET MELANGE HUILES-TENSIO-ACTIFS

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **19.05.2005 DE 102005023762**

(43) Veröffentlichungstag der Anmeldung:
**30.01.2008 Patentblatt 2008/05**

(73) Patentinhaber: **Forschungszentrum Jülich GmbH**
**52425 Jülich (DE)**

(72) Erfinder:
- **ALLGAIER, Jürgen**
  **52074 Aachen (DE)**
- **FRIELINGHAUS, Henrich**
  **81377 München (DE)**
- **FRANK, Christian**
  **50169 Horrem (DE)**

(56) Entgegenhaltungen:
**DE-A1- 19 839 054** **US-A- 5 518 716**



Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft ein Verfahren zur Effizienzsteigerung von Tensiden, zur Unterdrückung lamellarer Mesophasen, zur Temperaturstabilisierung des Einphasengebietes sowie ein Verfahren zur Verminderung der Grenzflächenspannung in Mikroemulsionen, welche Siliconöle enthalten, mittels Additiven sowie ein Tensid-Öl Gemisch.

Unter Mikroemulsionen werden im Folgenden Gemische aus Wasser, Öl und Tensid verstanden, welche thermodynamisch stabil sind.
Als Öl wird eine nicht mit Wasser mischbare Flüssigkeit verstanden.
In Mikroemulsionen werden als Öle gewöhnlicherweise Kohlenwasserstofföle verwendet. Es sind aber auch Mikroemulsionen mit anderen Ölen wie Esterölen bekannt. Eine Besonderheit stellen solche Mikroemulsionen dar, die Siliconöle beinhalten. Solche Mikroemulsionen sind nach dem Stand der Technik bekannt. Für diese Siliconöl-Mikroemulsionen eignen sich besonders Tenside, deren hydrophobe Komponente ein siliciumhaltiger organischer Rest ist, z. B. ein Oligodimethylsiloxan. Die Mikroemulsionen können Flüssigkeiten oder feste Gele sein. Beispielhaft können die Schriften US 5,705,562; US 5,707,613; EP 0 789 610 A1 und US 6,616,934 genannt werden.

Der Nachteil dieser Siliconölmikroemulsionen liegt im hohen Preis der benötigten Siliconöl-Tenside.
Alternativ können als Tenside auch Gemische aus Silicontensiden und konventionellen Tensiden, die nicht siliciumhaltig sind, verwendet werden (US 2003/0040571 A1).
Es sind auch Siliconöl-Mikroemulsionen ohne die Verwendung von silciumhaltigen Tensiden bekannt. Hierfür werden die gewöhnlichen nichtionischen oder ionischen Tenside oder Gemische daraus verwendet (US 6,013,683; US 6,071,975). Nachteilig bei diesen Systemen ist, dass sehr hohe Tensidanteile nötig sind, um Mikroemulsionen zu erhalten.
Als Öl können auch funktionelle Silicone verwendet werden, die z. B. Vinylgruppen, Si-H, Aminogruppen, Si-OH enthalten.
Die Mikroemulsionen können auch als Reaktionsmedien verwendet werden (EP 1 221 455 A1; US 5,518,716; US 5,661,215; US 5,684,085; US 6,207,781 B1; US 6,201,091 B1; US 5,017,297; US 5,891,954).
Die Effizienz der Tenside wird in der Menge Tensid ausgedrückt, welche benötigt wird, um einen bestimmten Anteil Öl im Wasser oder umgekehrt in Form eine Mikroemulsion zu vermischen. Eine Effizienzsteigerung bedeutet somit auch eine Aufweitung des Temperaturfensters, in dem die Mikroemulsion stabil ist.

Bei der technischen Formulierung von Mikroemulsionen treten jedoch häufig unerwünschte lamellare Mesophasen auf. Lamellare Mesophasen führen zu optischer Anisotropie und erhöhter Viskosität.
Ein weiteres Problem bei der technischen Formulierung von Mikroemulsionen stellt das Temperaturverhalten dar. Insbesondere führt die Zugabe eines Additivs im Allgemeinen zu einer Verlagerung der für die technische Anwendung wichtigen Einphasengebiete in andere Temperaturbereiche. Die Verschiebungen können in der Größenordnung von 10°C und mehr liegen. Dies hat jedoch zur Folge, dass z. B. Rezepturen geändert werden müssen, um sie dem sich jeweils neu einstellenden Temperaturverhalten des Einphasengebietes anzupassen.

Zusätzlich besteht das Bedürfnis, unter Einsparung von Tensiden eine mindestens gleich gute Formulierung zu erlangen. Neben Kostengründen ist die Tensideinsparung auch aus ökologischen oder gesundheitlichen Gründen vorteilhaft. Bei Siliconölmikroemulsionen sind diese Bedürfnisse besonders ausgeprägt, da die hier verwendeten Silicontenside sehr teuer sind oder die konventionellen Tenside in sehr hohen Konzentrationen eingesetzt werden müssen.

Die deutsche Patentanmeldung 198 39 054.8-41 offenbart ein Verfahren zur Effizienzsteigerung von Tensiden bei simultaner Unterdrückung lamellarer Mesophasen, ein Verfahren zur Stabilisierung der Temperaturlage des Einphasengebietes für Öl-, Wasser- Tensidmischungen, ein Verfahren zur Vergrößerung der Strukturgröße von emulgierten Flüssigkeitsteilchen in Mikroemulsionen sowie ein Verfahren zur Verminderung der Grenzflächenspannung von Öl-Wassergemischen, bei denen AB-Blockcopolymere mit einem wasserlöslichen Block A und einem wasserunlöslichen Block B zugegeben werden.
Es ist daher die Aufgabe der Erfindung, auch die Effizienz von Tensiden in Mikroemulsionen, welche Siliconöle enthalten, zu steigern und die Grenzflächenspannung zu verringern. Es sollen siliconölhaltige Mikroemulsionen mit weniger Tensid stabilisiert werden, d. h. in den Formulierungen Tensid eingespart werden, bzw. das Temperaturfenster der thermodynamischen Stabilität aufgeweitet werden. Weiterhin soll das Auftreten von lamellaren Phasen in siliconölhaltigen Mikroemulsionen unterdrückt werden und die Grenzflächenspannung soll vermindert werden. Das Temperaturverhalten siliconölhaltiger Mikroemulsionen soll durch Additive unbeeinflusst bleiben, das heißt, die Lage des Einphasengebietes im Phasendiagramm soll durch Zugabe der Additive bezüglich der Temperatur im wesentlichen nicht beeinflusst werden.
Es soll ebenfalls ein Additiv zur Verfügung gestellt werden, welches die oben genannten Vorteile bewirkt und z. B. einer Mikroemulsion zugemischt werden kann, ohne dass eine weitgehende Rezepturänderung vorgenommen werden muss.
Weiterhin soll ein Additiv zur Verfügung gestellt werden, das in Reinigern und/oder in siliconölhaltigen Mikroemulsionen eingesetzt werden kann und eine Reduzierung der für die Wirksamkeit notwendigen Tensidmenge bewirkt. Dazu zählen Haar- und Körperpflegeprodukte und Kosmetika wie Deodorants, Hautpflegemittel, Sonnencremes, Lotionen, Shampoos, Duschgele, Badezusätze, Schmierstoffe, Gleitmittel, Trennmittel, Pflanzenschutzmittel, Arzneimittel, Textilpflege und -hilfsmittel, Leder- und Pelzpflegemittel, Fahrzeugpflegemittel, Reiniger sowie Polituren, Einsatzstoffe für Haushalt, gewerbliche und industrielle Anwendungen. Damit soll eine Möglichkeit geschaffen werden, Mikroemulsionen herzustellen, deren Größe den emulgierten Flüssigkeitsteilchen in Emulsionen entspricht. Das Temperaturfenster der Stabilität der Mikroemulsionen soll bei gleichem Tensidgehalt vergrößert werden, wenn Siliconöle zugegen sind.

Überraschenderweise werden ausgehend vom Oberbegriff des Anspruchs 1 alle Aufgaben erfindungsgemäß dadurch gelöst, dass als Additiv ein Blockcopolymer mit einem wasserlöslichen Block A und einem Block B eingesetzt wird, der entweder ein Polyalkylenoxid mit mindestens 4 C-Atomen im Monomerbaustein oder ein Polydien, ein teilweise oder vollständig hydriertes Polydien mit einem möglichst geringen Gehalt an 1,4-Mikrostruktur bzw. einem hohen Gehalt an Kurzkettenverzweigung ist.

Block A ist dabei bevorzugt nicht in Siliconöl löslich und Block B ist bevorzugt nicht in Wasser löslich.

Block A besteht bevorzugt aus PEO aber auch Copolymere aus Ethylenoxid mit höheren Alkylenoxiden, wie beispielsweise Propylenoxid und/oder Butylenoxid sind möglich, ohne dass jedoch Block A seine Wasserlöslichkeit verliert.

Jedoch können alle Blöcke A eingesetzt werden, die wasserlöslich sind, so dass sie in Verbindung mit Block B ein Amphiphil bilden. Weiterhin können für den Block A beispielhaft Polyacrylsäure, Polymethacrylsäure, Polystyrolsulfonsäure sowie deren Alkalimetallsalze, bei denen mindestens teilweise eine Substitution der Säurefunktion durch Alkalimetallkationen erfolgt ist, Polyvinylpyridin und Polyvinylalkohol, Polymethylvinylether, Polyvinylpyrrolidin, Polysaccharide sowie deren Gemische genannt werden.

Innerhalb eines Blockes A können die Monomerkomponenten in beliebigen Reihenfolgen auftreten. Vorzugsweise sind die Einzelkomponenten wenigstens teilweise alternierend.

In einer weiterhin bevorzugten Ausführungsform haben die Monomerbausteine des Blockes A eine stochastische Folge.

Block A soll bevorzugt weiterhin nicht in Siliconöl löslich sein.

Block B ist hingegen bevorzugt ein Polyalkylenoxid mit mindestens 4 Kohlenstoffatomen im Monomerbaustein, bevorzugt Polybutylenoxid, Polypentylenoxid und Polyhexylenoxid, aber auch andere Polyalkylenoxide mit mindestens vier Kohlenstoffatomen im Monomerbaustein. Besonders bevorzugt ist 1,2 Butylenoxid als Monomerbaustein.

Ein Block B kann aus mindestens zwei Komponenten aus der Gruppe von Polybutylenoxid, Polypentylenoxid und Polyhexylenoxid, aber auch andere Polyalkylenoxide mit mindestens vier Kohlenstoffatomen im Monomerbaustein bestehen.

Block B kann auch Ethylenoxid und Propylenoxid umfassen, sofern die Siliconöllöslichkeit gegeben ist.

Block B sollte bevorzugt weiterhin nicht in Wasser löslich sein.

Weiterhin können Triblöcke der Struktur ABA bzw. BAB verwendet werden sowie sternförmige Polymere der Struktur $(AB)_n$ oder $(BA)_n$ , wobei n die Zahl der Arme im Sternpolymer symbolisiert. Im Falle von Polyalkylenoxid Blockcopolymeren kann das Zentrum der Sternstruktur durch beispielsweise einen n-wertigen Alkohol mit n = Anzahl der OH-Gruppen oder ein m-wertiges Amin mit m = Anzahl der Aminogruppen und n = Anzahl der an Stickstoff gebundenen H-Atome gegeben sein. Im Falle von $(AB)_n$ ist die Komponente A mit dem Zentrum des Sterns verbunden und im Falle $(BA)_n$ die Komponente B mit dem Zentrum des Sterns verbunden.

Eine weitere Ausführungsform von Block B sind Polydiene mit einem möglichst geringen Anteil an 1,4 Mikrostruktur bzw. deren teilhydrierte oder deren vollhydrierte Polyalkanvarianten. Mögliche Monomere für Block B sind: 1,3 Butadien, Isopren, 1,3 Pentadien, 2,3-Dimethyl-1,3-butadien, 1,3-Hexadien, Myrcen. Im Block B sind auch Gemische aus den entsprechenden Dienmonomeren möglich. Die Anzahl der C Atome in 1,3 Dienmonomeren beträgt zwischen 4 und 20, vorzugsweise 4 und 10, besonders bevorzugt 4 oder 5. Besonders bevorzugt ist Butadien und Isopren. Bevorzugt ist das Dien anionisch polymerisierbar. Die Verzweigung in den Polyalkanen geht auf die Verzweigung im Polydien zurück. Die kurzkettenverzweigten Polyalkanblöcke können jedoch auch ohne Hydrierung von Polydienen aus anderen Monomeren als Dienen hergestellt werden, z. B. Poly(1,2-Buten) aus 1-Buten.

$-(CH_2-CH=CH-CH_2)-$

1,4 Polybutadien

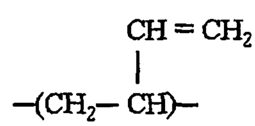

1,2 Polybutadien

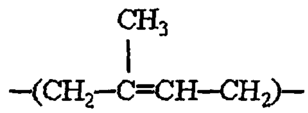

1,4 Polyisopren

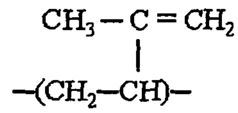

3,4 Polyisopren

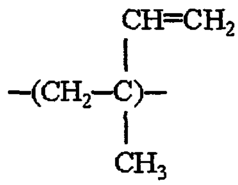

1,2 Polyisopren

Die Mikrostruktur des Polymerblocks B soll so sein, dass der 1,4-Gehalt möglichst klein ist. Idealerweise sollte er 10% nicht übersteigen. Weiterhin bevorzugte Bereiche, die zu guten Ergebnissen führen, reichen aber auch bis zu einem 1,4-Gehalt von 25% oder weniger bevorzugt 50%. Block B kann teilweise oder voll hydriert sein.
Die dadurch erhaltenen Polymere sind u.a. Poly (1-buten) (aus 1,2 Polybutadien) oder Poly (1-Hexen) (aus 1,2 Poly (1,3-Hexadien).
Der stereochemische Aufbau der hydrierten Variante sollte möglichst ataktisch sein.
Hier sind die gleichen Strukturen wie bei den Polyalkylenoxid-Blockcopolymeren möglich.

Es hat sich überraschenderweise herausgestellt, dass die erfindungsgemäßen AB Blockcopolymere so beschaffen sind, dass deren Block B in Siliconölen löslich ist.
Vorteilhafte Weiterbildungen der Erfindung sind in den Unteransprüchen angegeben.
Die Blöcke A und B können dabei Molekulargewichte zwischen 500 und 100000 vorzugsweise zwischen 1000 g/mol und 50000 g/mol und besonders vorzugsweise zwischen 3000 g/mol und 20000 g/mol annehmen.
Als Block A wird bevorzugt ein Polyethylenoxid - Block eingesetzt. Weiterhin als Block A auch ein Copolymer aus Ethylenoxid und Propylenoxid verwendet werden, welches in Wasser löslich ist.
Als Block B dient bevorzugt ein Polyalkylenoxidblock mit mindestens 4 C-Atomen im Monomerbaustein. Diese Blöcke B haben den Vorteil, dass sie besser herstellbar sind und mit den Tensiden besser mischbar sind, als Polymere mit Blöcken B = Polydien, teil- vollhydriertes Polydien.
Die erfindungsgemäß eingesetzten AB-Blockcopolymere mit Block B = Polyalkylenoxid können vorzugsweise aus einer Alkoxylierung durch sequenzielle Polymerisation der Blöcke erhalten werden.
Vorteilhafterweise ist Block B in Mineralölen bzw. Siliconölen löslich.
Bei Molekulargewichten der Blöcke A und B in der Größenordnung von 3000-20000 g/mol für die Blöcke A und B werden besonders vorteilhafte Eigenschaften der erfindungsgemäß eingesetzten AB-Blockcopolymere in Anwendungsprodukten beobachtet. So lösen sich die Polymere mit diesen vergleichsweise niedrigen Molekulargewichten schnell und gut auf, d. h. die Polymere sind leicht in Tensid einarbeitbar.

In einer bevorzugten Ausführungsform hat der Block A das ½ bis 2- fache Molekulargewicht von Block B.
In den erfindungsgemäß eingesetzten AB-Blockcopolymeren sollen die beiden Blöcke A und B einen möglichst hohen Unterschied in Ihrer Polarität aufweisen. Dabei ist Block A möglichst polar und Block B möglichst unpolar. Hierdurch wird das amphiphile Verhalten gesteigert.

Block A ist wasserlöslich und Block B ist vorzugsweise in unpolaren Medien löslich.

Vorteilhafterweise ist Block B in Mineralölen, hochsiedenden Estern oder aliphatischen Kohlenwasserstoffen bzw. in Siliconölen löslich. Dies gilt vorzugsweise auch bei Raumtemperatur.

Weiterhin weisen auch die AB-Triblockcopolymere mit dem Muster ABA sowie BAB sowie sternförmige Polymere dieser Monomerabfolge dieselbe erfindungsgemäße Wirkung auf und sind daher von der Erfindung umfasst.
Weiterhin sind auch sternförmige Polymere der Struktur $(AB)_n$ oder $(BA)_n$ von der Erfindung umfasst, wobei n die Zahl der Arme im Sternpolymer symbolisiert. Im Falle von Polyalkylenoxidblockcopolymeren kann das Zentrum der Sternstruktur durch beispielsweise einen n-wertigen Alkohol mit n = Anzahl der OH-Gruppen oder ein m-wertiges Amin mit n = Anzahl der an Stickstoff gebundenen H-Atome gegeben sein. Diese sternförmigen Polymere haben ebenfalls die erfindungsgemäße Wirkung.
Beispielhaft aber nicht beschränkend können folgende Tenside (C) und deren Gemische mit den erfindungsgemäßen

Additiven verwendet werden:

Nichtionische Tenside der Klasse Alkylalkoxylate, besonders Alkylalkoxylate mit einer engen Molekulargewichtsverteilung und/oder einem geringen Restalkoholgehalt.

Nichtionische Tenside der Klasse Alkylpolyglucoside (APG, "Zuckertenside", $C_iG_j$ mit 1 ≥ 8) mit Cotensid Alkohol ($C_x$-OH, x ≥ 6) Siliconpolyether-Tenside

Anionische Tenside, z. B. Fettalkoholsulfate, Alkylbenzolsulfonate, Alkylethersulfate, AOT (Natrium bis (2-ethylhexyl)sulfosuccinat),

Kationische Tenside

Gemische aus Tensiden, insbesondere nichtionisch/anionisch, oder nichtionisch/kationisch oder Silicontensid mit nicht siliciumhaltigem Tensid.

Erfindungsgemäß kann nun auch die Effizienz von Tensiden in Mikroemulsionen gesteigert werden, welche Siliconöle enthalten.
Beispielhaft aber nicht beschränkend kann die Erfindung auf Mikroemulsionen angewendet werden, welche Siliconöle folgender Strukturtypen gemäß den Typen linear, cyclisch und verzweigte Siloxane enthalten:

linear

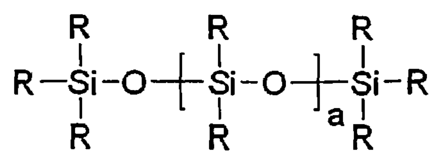

cyclisch

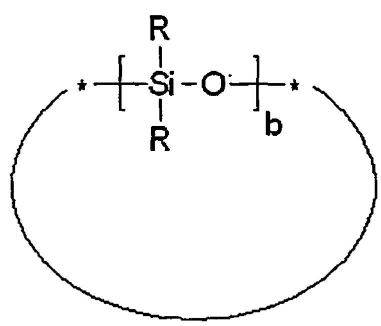

Verzweigungstelle

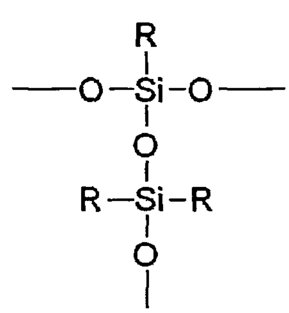

Hierbei ist:

R = organischer Rest,
bevorzugt ein aliphatischer oder aromatischer Kohlenwasserstoffrest, besonders bevorzugt $CH_3$.

Für R sind auch andere organische Reste möglich, welche beispielsweise funktionelle Gruppen aufweisen, wie:

OH-, Amino-, Epoxygruppen.
Es können auch mehrere Reste R vorliegen, welche verschieden sind.
Ein Teil der Reste R kann auch -H oder -OH sein.
a kann bevorzugt 0 bis 1000 betragen.
b kann besonders bevorzugt Werte zwischen 3 und 10 annehmen, wobei a und b verteilungsbezogene Mittelwerte sind. Besonders bevorzugt gilt für a = 0-10 und für b = 3-6.

Als Beispiels für Siliconöle können folgende Verbindungen genannt werden:

R = $CH_3$, a = 0 Hexamethyldisiloxan ($M_2$)

R = $CH_3$, a = 1 Oktamethyltrisiloxan (MDM)

R = $CH_3$, a = 2 Dekamethyltetrasiloxan ($MD_2M$)

R = $CH_3$, b = 3 Hexymethylcyclotrisiloxan ($D_3$)

R = $CH_3$, b = 4 Oktamethylcyclotetrasiloxan ($D_4$)

R = $CH_3$, b = 5 Dekamethylcyclopentasiloxan ($D_5$)

Bei den Siliconölen handelt es sich üblicherweise um technische Produkte, die in ihren Zusammensetzungen nicht monodispers sind.

Es sind auch Gemische mit verschiedenen Werten für a und b möglich sowie Gemische von linearen und/oder cyclischen und/oder verzweigten Siliconölen.
Die wässrige Phase der Mikroemulsion kann Additive wie Salze oder wasserlösliche organische Verbindungen enthalten, wie z. B. Glycole.
Auch die Ölphase kann Hilfsstoffe enthalten. Jedoch sollen die Additive und Hilfsstoffe nicht die Mikroemulsion zerstören. Beispielsweise kann dem Wasser Glycerin zugegeben werden, um so den Brechungsindex der wässrigen Komponente dem der Ölkomponente anzugleichen. Dadurch werden effizienzgesteigerte Mikroemulsionen, die optisch trüb sind, wieder transparent. Dieses Verfahren ist insbesondere für Mikroemulsionen, die im Bereich Kosmetika, Haar- und Körperpflegeprodukte eingesetzt werden, von Bedeutung.
Die erfindungsgemäßen Mikroemulsionen müssen nicht grundsätzlich flüssig sein. Es werden darunter auch gelartig-feste Gemische verstanden, sofern es sich im thermodynamischen Sinne um eine Mikroemulsion handelt. Die feste Form kann daher erhalten werden, z. B. durch Zugabe von Additiven zur wässrigen und/oder ölartigen Komponente oder durch in der Mikroemulsion vorhandene Mesophasen.

Das Massenverhältnis von wässriger Phase zu der Öl-Phase beträgt beispielsweise 0,01-100, bevorzugt 0,1-10, besonders bevorzugt 0,3-3
Der Massenanteil Blockcopolymer im Tensid-Blockcopolymergemisch beträgt beispielsweise bevorzugt 0,01-0,25, besonders bevorzugt 0,05-0,15.
Der Massenanteil Tensid/Blockcopolymergemisch in der Mikroemulsion beträgt bevorzugt 0,03-0,3, bevorzugt 0,05-0,2 in Abhängigkeit vom Temperaturfenster.

Erfindungsgemäß bleibt auch durch die Zugabe der erfindungsgemäßen AB-Blockcopolymere zur Wasser-Öl-Tensid-Mischung die Lage des einphasigen Gebietes im Phasendiagramm im gleichen Temperaturgebiet, die Effizienz der Tensidmischung wird erheblich gesteigert, lamellare Mesophasen werden in Mikroemulsionen kontrolliert und die Grenzflächenspannung wird abgesenkt. Außerdem behalten Mikroemulsionen ihre für sie charakteristischen Eigenschaften unter Vergrößerung ihrer Strukturgröße; so nehmen die emulgierten Strukturen Größen von bis zu ca. 2000 Angström an. Die Größe der emulgierten Flüssigteilchen hängt im Wesentlichen von der Tensidkonzentration ab.

Im Folgenden sollen einige Begriffe definiert werden:

C = Ein beliebiges Tensid oder Emulgator, wie anionisches, kationisches, nichtionisches Tensid oder Zuckertensid sowie deren Gemische, die mindestens zwei Tenside enthalten.
D = Additiv, welches dem Tensid C erfindungsgemäß zugefügt wird.
$\gamma$ = Gesamttensidkonzentration (Massenbruch) aus C und D mit

$$\gamma = \frac{m(C) + m(D)}{m_{ges}}$$

Hierin sind:

m = Masse in g.

$\gamma$ = dimensionsloser Massenbruch

$m_{ges}$ = Gesamtmasse aus $m_{wasser}$ + $m_{Öl}$ + m (C) + m (D)

$\tilde{\gamma}$ = Gesamttensidkonzentration am Kreuzungspunkt an dem im Phasendiagramm das einphasige auf das dreiphasige Gebiet trifft. Dies entspricht der bei gegebenem Wasser/Öl-Verhältnis minimal zur vollständigen Mischung von Wasser und Öl notwendigen Gesamttensidkonzentration.

$\delta$ = Massenbruch des Additivs D im Gemisch Tensid C + Additiv D, entspricht

$$\delta = \frac{m(D)}{m(C) + m(D)}$$

mit m = Masse in g und

$\delta$ = Massenbruch (dimensionslos)

1,2 PB6: Polybutadien

PIH13: hydriertes Polyisopren

PEP5: hydriertes Polyisopren

PB05 und PB010: Poly (1,2-butylenoxid)

PEO: Polyethylenoxid

Die zugehörigen Mikrostrukturen für die unpolaren Blöcke 1,2PB6, PIH13, PEP5 sind in Tabelle 1 angegeben, wobei die Werte für die hydrierten Varianten PIH13 und PEP5 sich auf die nicht-hydrierte Polyenvariante beziehen.
Die Effizienz der Tenside wird in der Menge Tensid ausgedrückt, welches benötigt wird, um einen bestimmten Anteil Öl im Wasser oder umgekehrt zu solubilisieren. Je geringer die benötigte Tensidmenge bei gleicher Wirksamkeit ist, desto höher ist die Effizienz. Eine Effizienzsteigerung ist auch dann gegeben, wenn die Mikroemulsion bei gleicher Tensidkonzentration über größere Temperaturbereiche stabilisiert wird.
Die Herstellung der Mikroemulsionen erfolgt ohne großen Eintrag von Energie. Die Komponenten können grundsätzlich in jeder beliebigen Reihenfolge miteinander gemischt werden.
Das Blockcopolymer und das Tensid müssen nicht als Einheit betrachtet werden, es kann aber sinnvoll sein, sie gemeinsam in eine Formulierung einzubringen.
Für die Beispiele wurden folgende Tenside verwendet. Pentaethylenglycolmonododecylether ($C_{12}E_5$), Triethylenglycolmonododecylether ($C_{12}E_3$), Didodecylammoniumbromid (DDAB), Hydroxy(polyethylenoxy)propylterminiertes polydimethyl-Siloxan Molekulargewicht 550 - 650 g/mol : 50% ($CH_2$-$CH_2$-O) (Gelest Inc. Morrisville, PA, USA) ($C_4D_3E_8$). Silicon-Polyether-Tenside, die als hydrophobe Einheit ein Heptamethyltrisiloxan Rest enthalten, wobei am mittleren Siliciumatom ein Hydroxyl(polyethylenoxy)propyl Rest angebracht ist.
Für M(DE10.3)M wurde mittels NMR-Spekroskopie ein mittlerer Ethoxylierungsgrad von 10.3 und für M(DE9.7) M ein mittlerer Ethoxylierungsgrad von 9.7 ermittelt.
Das Verhalten der erfindungsgemäßen Mikroemulsionen ist in den Figuren 1-9 dargestellt:
In diesen Diagrammen sind die Kurven zu jeweils einem $\delta$ - Wert eingezeichnet, welche die Begrenzung des

jeweiligen zu einem δ - Wert gehörigen Einphasengebiet charakterisieren. Die Spitze der jeweiligen Kurve ist derjenige Punkt, an dem verschiedene Mehrphasengebiete zusammentreffen. Dieser Punkt wird auch als Fischschwanzpunkt bezeichnet. Je weiter die Spitze einer Kurve bei niedrigen Tensidkonzentrationen, d. h. γ - Werten, angesiedelt ist, desto größer ist die Effizienz des Tensides C durch die Zugabe des Blockcopolymers D.
Die Bezeichnung 1 kennzeichnet dabei die Bereiche einphasiger Mikroemulsion, 2 beschreibt eine Öl in Wasser - Mikroemulsion in Koexistenz mit einer Ölphase und $\overline{2}$ entspricht einer Wasser in Öl- Mikroemulsion in Koexistenz mit einer Wasserphase. Lamellare Phasen werden in den Abbildungen mit $L_\alpha$ gekennzeichnet. Fehlt diese, so tritt im untersuchten Bereich keine lamellare Phase auf.

Fig.1: Temperatur/Tensidkonzentrationsdiagramm für das Gemisch Wasser - $M_2$ - $C_{12}E_5$-1,2-PB6-PEO6 als Funktion der Zugabe an 1,2-PB6-PEO6 (δ) bei konstantem Wasser/Öl - Verhältnis von $\phi$=0.5.

Fig. 2: Temperatur/Tensidkonzentrationsdiagramm für das Gemisch Wasser - $D_4$ - DDAB - $C_{12}E_3$- 1,2-PB6-PEO6 als Funktion der Zugabe an 1,2-PB6-PEO6 $\delta_2$ mit [$\delta_2 = m(PBO5 - PFO5)/(m(C12E3) + m(DDAB) + m(PBO5 - PEO5))$] und einem konstanten Wasser/Öl - Verhältnis von $\phi$ = 0.5. Das Verhältnis $\delta_1$ [$\delta_1 = m(DDAB)/((m(C12E3) + m(DDAB) + m(PBO5 - PEO5))$] zwischen ionischen und nichtionischen Tensid wurde dabei konstant gehalten.

Fig. 3: Temperatur/Tensidkonzentrationsdiagramm für das Gemisch Wasser - $M_2$ - M($DE_{10\cdot3}$)M- amphiphiles Polymer für die Polymere PEP5-PEO5, 1,2-PB6-PEO6, PIH13-PEO17 bei δ = 0.05 und einem konstanten Wasser/Öl - Verhältnis von $\phi$ = 0.5. Zum Vergleich zeigt die obere Abbildung das Phasendiagramm des Systems ohne Additiv ( δ=0).

Fig. 4: Temperatur/Tensidkonzentrationsdiagramm für das Gemisch Wasser - MDM - $C_4D_3E_8$ - amphiphiles Polymer für die Polymere PEP5-PEO5, 1,2-PB6-PEO6 bei δ=0.05 und einem konstanten Wasser/Öl - Verhältnis von $\phi$=0.5.

Fig. 5: Temperatur/Tensidkonzentrationsdiagramm für das Gemisch Wasser - cyclisches Silikonöl - M($DE_{9.7}$)M - 1,2-PB6-PEO6 als Funktion der Zugabe an 1,2-PB6-PEO6 (δ) bei einem konstanten Wasser/Öl - Verhältnis von $\phi$=0.5.

Fig. 6: Temperatur/Tensidkonzentrationsdiagramm für das Gemisch Wasser - $M_2$ - $C_{12}E_5$ - amphiphiles Polymer für die Polymere 1,2-PB6-PEO6 und PBO10-PEO10 bei δ = 0.05 und einem konstanten Wasser/Öl - Verhältnis von $\phi$ = 0.5. Zum Vergleich ist das Phasendiagramm ohne Additiv ( δ = 0) mit aufgeführt.

Fig. 7: Temperatur/Tensidkonzentrationsdiagramm für das Gemisch Wasser - $M_2$ - M($DE_{10.3}$)M-PBO5-PEO5 bei δ = 0.05 und einem konstanten Wasser/Öl - Verhältnis von $\phi$ = 0.5. Zum Vergleich zeigt die Abbildung mit δ = 0 das Phasendiagramm des Systems ohne Additiv.

Fig. 8: Temperatur/Tensidkonzentrationsdiagramm für das Gemisch Wasser - $D_4$ - M($DE_{9.7}$)M - PIH13-PE017 als Funktion der Zugabe an amphiphilem Blockcopolymer (δ) bei konstantem Wasser/Öl - Verhältnis von $\phi$ = 0.5.

Fig. 9: Kleinwinkelneutronenstreuspektrum für das Gemisch Wasser - MDM - $C_4D_3E_8$ - amphiphiles Polymer für das Polymer PEO5, 1,2-PB6-PEO6 nahe dem Fischschwanzpunkt ($\tilde{T},\tilde{\gamma}$) im Einphasengebiet bei δ = 0 und δ = 0.05.

Tabelle 1 zeigt die Charakterisierung der Blockcopolymere aus den Beispielen.
Tabelle 2 zeigt die Messwerte aus der Charakterisierung der Mikroemulsionen mittels Kleinwinkelneutronenstreuung.
Tabelle 2 gibt die Einwaagen des Polymergehaltes δ und des Tensidgehaltes γ nahe am Fischschwanzpunkt an. Die Lage der maximalen gestreuten Intensität $q_{max}$ charakterisiert im Wesentlichen die Domänengröße $d_{TS} \sim 2\pi/q_{max}$ - aber es liegt eine verfeinerte Auswertung der gestreuten Intensität mit der Teubner-Strey-Formel zu Grunde, und man erhält einen genaueren Wert für $d_{TS}$ und zusätzlich eine Korrelationslänge ξ die etwa den halben Wert von $d_{TS}$ annimmt.
Die in den Figuren 1-8 dargestellten T/γ Diagramme beziehen sich auf Systeme mit konstantem Wasser/Öl Volumenverhältnis von 1:1 und sollen im folgenden erläutert werden.
Figur 1 zeigt, wie sich die Effizienz des Gesamttensides mit der Zugabe des Blockcopolymers 1,2-PB6-PEO6 vergrößert. Formuliert man eine Mikroemulsion aus gleichen Anteilen Wasser und $M_2$ (Hexamethyldisiloxan) und $C_{12}E_5$, so liegt bei einer Tensidkonzentration von 23 % (γ=0.23) zwischen 0 °C und 100 °C nur Zwei- und Dreiphasengebiete vor. Wird in der gleichen Mischung 5 % des Tensides $C_{12}E_5$ durch das amphiphile Blockcopolymer 1,2-PB6-PEO6 ersetzt(δ = 0.05), so erhält man zwischen 45 °C und 62 °C ein Einphasengebiet. Zusätzlich ist nur eine sehr geringe Verschiebung der Phasengrenze auf der Temperaturachse am Fischschwanzpunkt zu verzeichnen. Dieses ist gleichbedeutend damit, dass das Blockcopolymer D die Lage der Wirksamkeit des Tensides C bezüglich seiner Anwendungstemperatur im Wesentlichen invariant lässt. Beide gezeigten Systeme enthalten eine lamellare Phase, deren Ausdehnung beim Einsatz des amphiphilen Blockcopolymers bezüglich des Fischschwanzpunktes noch zurückgeht.

Die Effizienz des Gesamttensides wird auch in dem in Figur 2 gezeigten Beispiel eines Systems mit kationischem Tensid DDAB und nichtionischem Tensid $C_{12}E_3$ gesteigert. Das Blockcopolymer kann in diesem Fall die Synenergieeffekte der Tensidmischung noch weiter steigern. Außerdem treten in diesem System keine Mesophasen auf.

Figur 3 zeigt eine Übersicht über die Effizienz und die Temperaturlage von verschiedenen Wasser - $M_2$ - M $(DE_{10.3})$M - amphiphiles Polymer Systemen, wobei die Polymere PEP5-PEO5, 1,2-PB6-PEO6 und PIH13-PEO17 bei $\delta = 0.05$ und einem konstanten Wasser/Öl-Verhältnis von $\phi = 0.5$ eingesetzt wurden. Bei allen verwendeten Polymeren beobachtet man eine Zunahme der Effizienz und eine nahezu unveränderte Temperaturlage im Vergleich zum Ausgangssystem mit $\delta = 0$. Für die Polymere PEP5 - PEO5 und 1,2PB6-PEO6 geht die lamellare Phase bezüglich des Fischschwanzpunktes leicht zurück, obwohl zu erwarten wäre, dass aufgrund der höheren Effizienz die lamellare Phase näher an den Fischwanzpunkt rücken sollte. Für PIH13-PEO17 ist eine lamellare Phase im Messbereich nicht zu sehen.

Figur 4 zeigt, wie sich die Effizienz des Gesamttensides mit der Zugabe der Blockcopolymere PEP5-PEO5 und 1,2-PB6-PEO6 in der Mischung aus Wasser - MDM - $C_4D_3E_8$ - amphiphiles Polymer bei $\delta = 0.05$ vergrößert. Auch in diesem Beispiel wurde ein konstantes Wasser/Öl-Verhältnis von $\phi = 0.5$ verwendet. Im Vergleich zum polymerfreien System mit $\delta = 0$ zeigen beide Polymere eine deutliche Effizienzsteigerung. Insgesamt nimmt diese aber beim besser im Silikonöl löslichen Polymer 1,2-PB6-PEO6 mehr zu. Im Bezug auf das Temperaturverhalten treten dieselben Charakteristika auf.

Der wasserunlösliche Block im Blockcopolymer PEP5 - PEO5 weist einen geringen Anteil an Kurzkettenverzweigung auf bzw. einen hohen Anteil an 1,4 Mikrostruktur im zugrunde liegenden Polydien. PEP5 - PEO5 eignet sich zwar noch zur Effizienzsteigerung im kleinsten Dimethylsilixan $M_2$ , die Effizienzsteigerung durch PEP5 - PEO5 im nächst höheren Dimethylsiloxan MDM ist jedoch deutlich geringer als die von 1,2PB6-PEO6, welches nur 9% an 1,4 Mikrostruktur im hydrophoben Block besitzt. Bei höhermolekulareren Siloxanen lässt sich mit PEP5-PEO5 keine Effizienzsteigerung mehr erzielen.

Figur 5 zeigt eine Übersicht über die Effizienz und die Temperaturlage von verschiedenen Wasser - cyclischen Silikonöl - $M(DE_{9.7})M$ - 1,2-PB6-PEO6 Systemen, wobei die Silikonöle $D_4$ und $D_5$ in einem konstanten Wasser/Öl- Verhältnis von $\phi = 0.5.$ vorliegen. Es wurden jeweils die polymerfreien Systeme ($\delta = 0$) und Systeme mit 5 % Polymer in der Tensidmischung untersucht. In beiden Fällen wird die Effizienz durch das Polymer 1,2-PB6-PEO6 deutlich gesteigert, insgesamt fällt diese aber beim ineffizienteren, $D_5$ - haltigen System stärker aus.

Figur 6 zeigt, wie sich die Effizienz des Gesamttensides mit der Zugabe der Blockcopolymere 1,2-PB6-PEO6 und PBO10-PEO10 in der Mischung aus Wasser - $M_2$ - $C_{12}E_5$ - amphiphiles Polymer bei $\delta = 0.05$vergrößert. Auch in diesem Beispiel wurde ein konstantes Wasser/Öl- Verhältnis von $\phi =0.5$ verwendet. Im Vergleich zum polymerfreien System mit $\delta = 0$ zeigen beide Polymere eine deutliche Effizienzsteigerung.

Lamellare Phasen sind in der Mikroemulsion mit und ohne Polymer zu erkennen. Auch hier würde erwartet werden, dass die lamellaren Phasen in effizienten Systemen näher an den Fischschwanzpunkt heranreicht als es der Fall ist.

Figur 7 zeigt, wie sich die Effizienz des Gesamttensides mit der Zugabe des Blockcopolymers PBO5-PEO5 in der Mischung aus Wasser - $M_2$ - $M(DE_{10.3})M$ bei $\delta = 0.05$ vergrößert. Auch in diesem Beispiel wurde ein konstantes Wasser/Öl- Verhältnis von $\phi = 0.5$ verwendet. Die Lage der Phaseninversionstemperatur wird dabei geringfügig zu höheren Temperaturen verschoben. Lamellare Phasen sind in der Mikroemulsion mit und ohne Polymer zu erkennen. Auch hier würde erwartet werden, dass die lamellaren Phasen in effizienten Systemen näher an den Fischschwanzpunkt heranreicht als es der Fall ist.

Figur 8 zeigt, wie sich die zur Bildung der Mikroemulsion notwendige Gesamttensidmenge mit der Zugabe des Blockcopolymers PIH13-PEO17 in der Mischung aus Wasser - $D_4$ - $M(DE_{9.7})M$ bei $\delta = 0.05$ deutlich verringert. Die Phaseninversionstemperatur bleibt dabei in diesem Beispiel bei konstantem Wasser/Öl- Verhältnis von $\phi = 0.5$ nahezu unverändert.

Figur 9 zeigt den makroskopischen Streuquerschnitt ***I*** (proportional zur Streuintensität) als Funktion des Streuvektors ***Q*** für Mikroemulsionen ohne Polymer und mit Polymer. Es wurde jeweils die minimal mögliche Tensidkonzentration am Fischschwanzpunkt gewählt. Die durchgezogenen Linien sind Anpassungskurven nach der Teubner-Strey-Formel, die das Intensitätsmaximum gut beschreiben. Die Position des Maximums ist umgekehrt proportional zur Domänengröße $\boldsymbol{d_{TS}}$ , und somit sieht man direkt die Vergrößerung der Domänen unter dem Einfluss des Polymers. Das Maximum der gestreuten Intensität wird häufig mit der Teubner-Strey-Formel (M. Teubner, R. Strey, J. Chem. Phys. 87 (1987) 3195) beschrieben. Aus dieser Beschreibung erhält man genaue Werte für die Domänengröße $\boldsymbol{d_{TS}}$ und für eine Korrellationslänge $\xi$, die etwa den halben Wert von $\boldsymbol{d_{TS}}$ annimmt.

Tabelle 2 und Figur 9 zeigen, dass die Größe der Domänen, beim System mit Blockcopolymer deutlich zunimmt. Dies bedeutet, dass mit weniger Tensid im System mit Polymer größere Mengen an Wasser und Öl gemischt werden können. Des Weiteren belegen die Streukurven eine thermodynamisch stabile Mikrostruktur sowohl im polymerhaltigen als auch polymerfreien System.

Die erfindungsgemäße Absenkung der Grenzflächenspannung wird am Beispiel des Polymers PBO10-PEO10 im System Wasser - $M_2$ - $C_{12}E_5$ gezeigt. Im polymerfreien System erhält man mit Hilfe des *Spinning-Drop-Tensiometers* bei 56 ˚C eine Grenzflächenspannung $\sigma_{ab}$ zwischen Wasser und Silikonöl von 3.58 $*10^{-2}$ mNm. Ersetzt man nun 5 % des Tensides durch PBO10-PEO10 so wird die Grenzflächenspannung auf 2,2 $*10^{-2}$ mNm erniedrigt. Diese Absenkung lässt sich auf alle gezeigten Beispiele übertragen.

In den Beispielen wurde ein Polymeranteil im Tensid von 5% entsprechen $\delta$ = 0,05 verwendet, jedoch können auch andere Polymergehalte verwendet werden. Insbesondere bei hohen Polymergehalten ist die Effizienzsteigerung stärker ausgeprägt. Vorzugsweise liegt $\delta$ zwischen 0,01 und 0,25.

Mit den erfindungsgemäß eingesetzten AB Blockcopolymeren wird die Grenzflächenspannung von Tensiden, wie beispielsweise anionischen, kationischen und nichtionischen Tensiden, Zuckertensiden, Silicontensiden, insbesondere technischen Tensidgemischen, gesenkt. Das Auftreten lamellarer Mesophasen wird unterdrückt. Das Temperaturverhalten der Mikroemulsionen bleibt unverändert, das heißt die Lage des Einphasengebietes bezüglich der Temperatur im Phasendiagramm wird durch die Zugabe der erfindungsgemäß eingesetzten Additive nicht beeinflusst. Daher muss die Rezeptur nicht verändert werden, um eine gleichbleibende Lage des Einphasengebietes bezüglich der Temperatur im Einphasendiagramm zu bewirken.

Die erfindungsgemäßen AB-Blockcopolymere sowie ABA und BAB sowie sternförmige Coblockpolymere können vorzugsweise zum Stabilisieren von Mikroemulsionen enthaltenden Kosmetika eingesetzt werden. Weiterhin können sie als Schmierstoffe bevorzugt im Textilbereich, in Arzneimitteln oder Trennmittel eingesetzt werden.

Zu den möglichen Anwendungen zählen Haar- und Körperpflegeprodukte und Kosmetika wie Deodorants, Hautpflegemittel, Sonnencremes, Lotionen, Shampoos, Duschgele, Badezusätze, Schmierstoffe, Gleitmittel, Trennmittel, Pflanzenschutzmittel, Arzneimittel, Textipflege und -hilfsmittel, Leder- und Pelzpflegemittel, Fahrzeugpflegemittel, Reiniger sowie Polituren, Einsatzstoffe für Haushalt, gewerbliche und industrielle Anwendungen. Damit wird eine Möglichkeit geschaffen, Mikroemulsionen herzustellen, deren Größe der emulgierten Flüssigkeitsteilchen denen von Emulsionen entsprechen. Das Temperaturfenster der Stabilität der Mikroemulsionen soll bei gleichem Tensidgehalt vergrößert werden, wenn Siliconöle zugegen sind.

Mikroemulsionen können auch als Reaktionsmedien verwendet werden, sie können hydrophobe Verunreinigungen aufnehmen oder durch die Aufnahme der hydrophoben Verunreinigungen sich bilden, beispielsweise bei der Verwendung als Wasch- oder Reinigungsmittel. Die Erfindungsgemäßen Mikroemulsionen können auch hydrophobe Bestandteile abgeben und/oder feste oder flüssige Oberflächen benetzen. Siliconöle eignen sich hierfür besonders aufgrund ihrer Spreit-Wirkung.

Die mittels der erfindungsgemäßen Zugabe der AB Blockcopolymere hergestellten siliconölhaltigen Mikroemulsionen weisen emulgierte Flüssigkeitsvolumina auf, die denen von Emulsionen entsprechen.

Mit der Effizienzsteigerung ist auch gleichzeitig eine Aufweitung des Temperarturintervalls verbunden, innerhalb dessen die Mikroemulsion thermodynamisch stabil ist. Dies ist besonders für technische Anwendungen von Vorteil, wo eine Stabilität über große Temperaturbereiche gewährleistet sein muss.

***Tabelle 1***

| | *Unpolare Block* | | | | | *Blockcopolymer* | |
|---|---|---|---|---|---|---|---|
| | | | Mikrostruktur | | | | |
| | Mn | Mw /Mn | 1,4 | 1,2 | 3,4 | Mn | Mw / Mn |
| 1,2 PB 6-PEO 6 | 4.660 | 1.03 | 9 | 91 | | 13.100 | 1.03 |
| PIH 13-PEO 17 | 12.300 | 1.03 | 10 | 19 | 71 | 21.700 | 1.03 |
| PEP 5- PEO 5 | 4.730 | 1.03 | 93 | | 7 | 10.500 | 1.03 |
| PBO 5-PEO 5 | 5.700 | 1.06 | | | | 12.300 | 1.07 |
| PBO 10-PEO 10 | 9.100 | 1.04 | | | | 19.600 | 1.04 |

**Tabelle 2**

| Polymer | $\delta$ | $\gamma$ | $q_{max}$/ $Å^{-1}$ | $\xi$/ Å | $d_{TS}$/ Å |
|---|---|---|---|---|---|
| - | 0 | 0.153 | 0.0132 | 216.74 | 449.39 |
| 1,2-PB6-PEO6 | 0.05 | 0.091 | 0.0064 | 359.22 | 900.39 |

## Patentansprüche

1. Verfahren zur Steigerung der Effizienz von Tensiden in Mikroemulsionen, welche mindestens ein Siliconöl enthalten,
**dadurch gekennzeichnet,**
**dass** der Mikroemulsion als Additiv ein Blockcopolymer mit einem wasserlöslichen Block A und einem Block B zugesetzt wird, der entweder ein Polyalkylenoxid mit mindestens 4 C-Atomen im Monomerbaustein oder ein Polydien oder ein teilweise oder vollständig hydriertes Polydien oder ein Polyalkan ist.

2. Verfahren zur Unterdrückung lamellarer Phasen in Wasser-, Öl-, Tensid-Gemischen, welche mindestens ein Siliconöl enthalten,
**dadurch gekennzeichnet,**
**dass** dem Gemisch als Additiv ein Blockcopolymer mit einem wasserlöslichen Block A und einem Block B zugesetzt wird, der entweder ein Polyalkylenoxid mit mindestens 4 C-Atomen im Monomerbaustein oder ein Polydien oder ein teilweise oder vollständig hydriertes Polydien oder ein Polyalkan ist.

3. Verfahren zur Stabilisierung der Temperaturlage des Einphasengebietes für Öl-, Wasser,- Tensidmischungen, welche mindestens ein Siliconöl enthalten
**dadurch gekennzeichnet,**
**dass** der Öl-, Wasser-, Tensidmischung als Additiv ein Blockcopolymer mit einem wasserlöslichen Block A und einem Block B zugesetzt wird, der entweder ein Polyalkylenoxid mit mindestens 4 C-Atomen im Monomerbaustein oder ein Polydien oder ein teilweise oder vollständig hydriertes Polydien oder ein Polyalkan ist.

4. Verfahren zur Verminderung der Grenzflächenspannung von Öl-, Wassergemischen, die Tenside und mindestens ein Siliconöl enthalten,
**dadurch gekennzeichnet,**
**dass** als Additiv ein Blockcopolymer mit einem wasserlöslichen Block A und einem Block B zugesetzt wird, der entweder ein Polyalkylenoxid mit mindestens 4 C-Atomen im Monomerbaustein oder ein Polydien oder ein teilweise oder vollständig hydriertes Polydien oder ein Polyalkan ist.

5. Verfahren nach einem der Ansprüche 1 bis 4,
**dadurch gekennzeichnet,**
**dass** Block A nicht in einem Öl löslich ist, welches als mindestens eine Komponente Silikonöl enthält.

6. Verfahren nach einem der Ansprüche 1 bis 5,
**dadurch gekennzeichnet,**
**dass** Block A aus mindestens einer Komponente aus der Gruppe der Monomere Ethylenoxid, Propylenoxid, Butylenoxid, höheren Alkynenoxide, Polyacrylsäure, Polymethacrylsäure, Polystyrolsulfonsäure sowie deren Alkalimetallsalze, bei denen mindestens teilweise eine Substitution der Säurefunktion durch Alkalimetallkationen erfolgt ist, Polyvinylpyridin und Polyvinylalkohol, Polymethylvinylether, Polyvinylpyrrolidin, Polysaccharide besteht.

7. Verfahren nach einem der Ansprüche 1 bis 6,
**dadurch gekennzeichnet,**
**dass** als Block A ein Polyethylenoxid (PEO) eingesetzt wird.

8. Verfahren nach einem der Ansprüche 1 bis 6,
**dadurch gekennzeichnet,**
**dass** ein Block A eingesetzt wird, in dem die Monomereinheiten in einer beliebigen Reihenfolge auftreten.

9. Verfahren nach einem der Ansprüche 1 bis 8,
**dadurch gekennzeichnet,**
**dass** Blöcke A eingesetzt werden, in denen die Monomereinheiten eine stochastische Folge besitzen.

10. Verfahren nach einem der Ansprüche 1 bis 9,
**dadurch gekennzeichnet,**
**dass** Block B in Öl löslich ist, wobei das Öl als mindestens eine Komponente Siliconöl enthält.

11. Verfahren nach einem der Ansprüche 1 bis 10,
**dadurch gekennzeichnet,**

**dass** die Monomerbausteine des Blockes B mindestens vier Kohlenstoffatome umfassen.

**12.** Verfahren nach Anspruch 11,
**dadurch gekennzeichnet,**
**dass** die Monomereinheiten des Blockes B mindestens eine Komponente aus der Gruppe bestehend aus Butylenoxid, Pentylenoxid und Hexylenoxid sowie weitere Alkylenoxide besteht, welche mindestens 4 C-Atome besitzen.

**13.** Verfahren nach einem der Ansprüche 1 bis 10,
**dadurch gekennzeichnet,**
**dass** ein Block B eingesetzt wird, welcher als Monomereinheit Ethylenoxid oder Propylenoxid enthält, wobei die Öllöslichkeit nach Anspruch 10 weiterhin gegeben ist.

**14.** Verfahren nach einem der Ansprüche 1 bis 10,
**dadurch gekennzeichnet,**
**dass** ein Block B eingesetzt wird, der ein Polydien, ein teilweise oder voll hydriertes Polydien mit einem Anteil von höchstens 50% an 1,4 Mikrostruktur im Polydien oder im zugrunde liegenden Polydien ist.

**15.** Verfahren nach Anspruch 14,
**dadurch gekennzeichnet,**
**dass** ein Block B eingesetzt wird, der ein Polydien, ein teilweise oder voll hydriertes Polydien mit einem Anteil von höchstens 25% an 1,4 Mikrostruktur im Polydien oder im zugrunde liegenden Polydien ist.

**16.** Verfahren nach Anspruch 14 oder 15,
**dadurch gekennzeichnet,**
**dass** ein Block B eingesetzt wird, der ein Polydien, ein teilweise oder voll hydriertes Polydien mit einem Anteil von höchstens 10% an 1,4 Mikrostruktur im Polydien oder im zugrunde liegenden Polydien ist.

**17.** Verfahren nach einem der Ansprüche 1 bis 16,
**dadurch gekennzeichnet,**
**dass** ein Block B verwendet wird, welcher ein Polybutatien und/oder Polyisopren und/oder teilweise oder vollhydriertes Polybutadien oder Polyisopren ist.

**18.** Verfahren nach einem der Ansprüche 1 bis 16,
**dadurch gekennzeichnet,**
**dass** als Block B ein Polyalkan verwendet wird, welches nicht durch Hydrierung eines Polydiens hergestellt wurde.

**19.** Verfahren nach einem der Ansprüche 1 bis 18,
**dadurch gekennzeichnet,**
**dass** als Blockcopolymer mindestens eine Komponente aus der Gruppe der eine Verbindungen mit der Struktur nach dem Muster AB, ABA, BAB, $(AB)_n$-Stern oder $(BA)_n$-Stern verwendet wird.

**20.** Verfahren nach einem der Ansprüche 1 bis 19,
**dadurch gekennzeichnet,**
**dass** Block B in reinen Siliconölen löslich ist.

**21.** Verfahren nach einem der Ansprüche 1 bis 20,
**dadurch gekennzeichnet,**
**dass** Block A ein Molekulargewicht zwischen 500 g/mol und 100000 g/mol hat.

**22.** Verfahren nach einem der Ansprüche 1 bis 21,
**dadurch gekennzeichnet,**
**dass** Block B ein Molekulargewicht zwischen 500 g/mol und 100000 g/mol hat.

**23.** Verfahren nach einem der Ansprüche 1 bis 22,
**dadurch gekennzeichnet,**
**dass** als Siliconöl Polydimethylsiloxan verwendet wird.

**24.** Verfahren nach Anspruch 23,

**dadurch gekennzeichnet,**
**dass** das Siliconöl im Mittel maximal 10 Dimethylsiloxan-Einheiten besitzt.

**25.** Tensid-Öl-Gemisch enthaltend als mindestens eine Komponente ein Siliconöl,
**dadurch gekennzeichnet,**
**dass** als Additiv ein Blockcopolymer nach einem der Ansprüche 1 bis 24 enthält.

**26.** Stoffsystem nach Anspruch 25,
**dadurch gekennzeichnet, dass** es Bestandteil einer Mikroemulsion ist.

**27.** Verwendung der Stoffe nach den Ansprüchen 25 und 26 als Bestandteile von Haar- und Körperpflegeprodukten und Kosmetika wie Deodorants, Hautpflegemitteln, Sonnencremes, Lotionen, Shampoos, Duschgele, Badezusätze, Schmierstoffen, Gleitmitteln, Trennmitteln, Pflanzenschutzmitteln, Arzneimitteln, Textipflege und -hilfsmitteln, Leder- und Pelzpflegemitteln, Fahrzeugpflegemitteln, Reinigern sowie Polituren, Wasch- und Reinigungsmitteln.

## Claims

**1.** Method for increasing the efficiency of surfactants in microemulsions containing at least one silicon oil,
**characterised in that**
a block copolymer with a water soluble block A and a block B, that is either a polyalkylene oxide with at least 4 C atoms in the monomer component or a polydiene or a partially or completely hydrated polydiene or a polyalkane, is added to the micro emulsion as an additive.

**2.** Method for suppressing lamellar phases in water, oil, surfactant mixtures containing at least one silicon oil,
**characterised in that**
a block copolymer with a water soluble block A and a block B, that is either a polyalkylene oxide with at least 4 C atoms in the monomer component or a polydiene or a partially or completely hydrated polydiene or a polyalkane, is added to the mixture as an additive.

**3.** Method for stabilising the temperature level of the single phase region for oil, water, surfactant mixtures containing at least one silicon oil,
**characterised in that**
a block copolymer with a water soluble block A and a block B, that is either a polyalkylene oxide with at least 4 C atoms in the monomer component or a polydiene or a partially or completely hydrated polydiene or a polyalkane, is added to the oil, water, surfactant mixture as an additive.

**4.** Method for reducing the surface tension of oil, water mixtures containing surfactants and at least one silicon oil,
**characterised in that**
a block copolymer with a water soluble block A and a block B, that is either a polyalkylene oxide with at least 4 C atoms in the monomer component or a polydiene or a partially or completely hydrated polydiene or a polyalkane, is added as an additive.

**5.** Method according to one of the Claims 1 to 4,
**characterised in that**
block A is not soluble in an oil containing silicon oil as at least one component.

**6.** Method according to one of the Claims 1 to 5,
**characterised in that**
block A consists of at least one component from the group of the monomers ethylene oxide, propylene oxide, butylene oxide, higher alkylene oxides, polyacrylic acid, polymethacrylic acid, polystyrolsulfonic acid as well as their alkaline metal salts, wherein an at least partial substitution of the acid function by alkaline metal cations has occurred, polyvinyl pyridine and polyvinyl alcohol, polymethylvinyl ether, polyvinyl pyrrolidine, polysaccharide.

**7.** Method according to one of the Claims 1 to 6,
**characterised in that**
a polyethylene oxide (PEO) is used as block A.

**8.** Method according to one of the Claims 1 to 6,
**characterised in that**
a block A is used, in which the monomer units occur in a random sequence.

**9.** Method according to one of the Claims 1 to 8,
**characterised in that**
blocks A are used, in which the monomer units follow a stochastic sequence.

**10.** Method according to one of the Claims 1 to 9,
**characterised in that**
block B is soluble in oil, whereby the oil contains silicon oil as at least one component.

**11.** Method according to one of the Claims 1 to 10,
**characterised in that**
the monomer components of the block B comprise at least four carbon atoms.

**12.** Method according to Claim 11,
**characterised in that**
the monomer units of the block B comprise at least one component from the group consisting of butylene oxide, pentylene oxide and hexylene oxide as well as further alkylene oxides comprising at least 4 C atoms.

**13.** Method according to one of the Claims 1 to 10,
**characterised in that**
a block B is used that comprises ethylene oxide or propylene oxide as a monomer unit, whereby the oil solubility according to Claim 10 is maintained.

**14.** Method according to one of the Claims 1 to 10,
**characterised in that**
a block B is used that is a polydiene, a partially or completely hydrated polydiene with a content of no more than 50% of 1,4 microstructure in the polydiene or in the base polydiene.

**15.** Method according to Claim 14,
**characterised in that**
a block B is used that is a polydiene, a partially or completely hydrated polydiene with a content of no more than 25% of 1,4 microstructure in the polydiene or in the base polydiene.

**16.** Method according to Claims 14 or 15,
**characterised in that**
a block B is used that is a polydiene, a partially or completely hydrated polydiene with a content of no more than 10% of 1,4 microstructure in the polydiene or in the base polydiene.

**17.** Method according to one of the Claims 1 to 16,
**characterised in that**
a block B is used that is a polybutadiene and/or polyisoprene and/or a partially or completely hydrated polybutadiene or a polyisoprene.

**18.** Method according to one of the Claims 1 to 16,
**characterised in that**
a polyalkane that has not been produced by means of hydration of a polydiene is used as block B.

**19.** Method according to one of the Claims 1 to 18,
**characterised in that**
at least one component from the group using a compound with the structure according to pattern AB, ABA, BAB, $(AB)_n$ star or $(BA)_n$ star is used as a block copolymer.

**20.** Method according to one of the Claims 1 to 19,
**characterised in that**
block B is soluble in pure silicon oil.

**21.** Method according to one of the Claims 1 to 20,
**characterised in that**
block A has a molecular weight of between 500 g/mol and 100000 g/mol.

**22.** Method according to one of the Claims 1 to 21,
**characterised in that**
block B has a molecular weight of between 500 g/mol and 100000 g/mol.

**23.** Method according to one of the Claims 1 to 22,
**characterised in that**
polydimethylsiloxane is used as a silicon oil.

**24.** Method according to Claim 23,
**characterised in that**
the silicon oil on average comprises 10 dimethylsiloxane units.

**25.** Surfactant / oil mixture, comprising silicon oil as at least one component,
**characterised in that**
the same comprises a block copolymer according to one of the Claims 1 to 24 as an additive.

**26.** Material system according to Claim 25,
**characterised in that**
the same is a part of a microemulsion.

**27.** Use of the materials according to Claims 25 and 26 as parts of hair and body care products and cosmetics such as deodorants, skin care products, sun screens, lotions, shampoos, shower gels, bath additives, lubricants, lubes, separating agents, plant protectants, medicines, textile care agents and auxiliaries, leather and fur cleaning agents, vehicle care products, cleaning as well as polishing products, washing and cleaning agents.

## Revendications

**1.** Procédé d'augmentation de l'efficacité de tensioactifs dans des microémulsions qui contiennent au moins une huile de silicone, **caractérisé en ce que** l'on ajoute à la microémulsion comme additif, un copolymère en bloc comportant un bloc A et un bloc B hydrosoluble, qui est soit un oxyde de polyalkylène comportant au moins 4 atomes de carbone dans l'élément monomère soit un polydiène ou un polydiène ou un polyalcane partiellement ou complètement hydrogéné.

**2.** Procédé de suppression des phases lamellaires dans des mélanges aqueux, huileux, de tensioactifs qui contiennent au moins une huile de silicone, **caractérisé en ce que** l'on ajoute au mélange comme additif, un copolymère en bloc comportant un bloc A et un bloc B hydrosoluble qui est soit un oxyde de polyalkylène comportant au moins 4 atomes de carbone dans l'élément monomère, soit un polydiène ou un polydiène ou un polyalcane partiellement ou complètement hydrogéné.

**3.** Procédé de stabilisation de la température de la zone monophase des mélanges huileux, aqueux, de tensioactifs qui contiennent au moins une huile de silicone, **caractérisé en ce que** l'on ajoute au mélange huileux, aqueux, de tensioactifs comme additif, un copolymère en bloc comportant un bloc A et un bloc B hydrosoluble qui est soit un oxyde de polyalkylène comportant au moins 4 atomes de carbone dans l'élément monomère, soit un polydiène ou un polydiène ou un polyalcane partiellement ou complètement hydrogéné.

**4.** Procédé de réduction de la tension interfaciale de mélanges huileux, aqueux qui contiennent des tensioactifs et au moins une huile de silicone, **caractérisé en ce que** l'on ajoute comme additif, un copolymère en bloc comportant un bloc A et un bloc B hydrosoluble qui est soit un oxyde de polyalkylène comportant au moins 4 atomes de carbone dans l'élément monomère, soit un polydiène ou un polydiène ou un polyalcane partiellement ou complètement hydrogéné.

**5.** Procédé selon l'une quelconque des revendications 1 à 4, **caractérisé en ce que** le bloc A n'est pas soluble dans une huile qui contient au moins un composant huile de silicone.

6. Procédé selon l'une des revendications 1 à 5, **caractérisé en ce que** le bloc A est constitué au moins d'un composant du groupe des monomères oxyde d'éthylène, oxyde de propylène, oxyde de butylène, oxyde d'alkylène supérieur, acide polyacrylique, acide polyméthacrylique, acide polystyrène-sulfonique et leurs sels de métaux alcalins dans lesquels au moins en partie, une substitution de la fonction acide est effectuée par des cations de métaux alcalins, polyvinylpyridine et alcool de polyvinyle, polyméthylvinyléther, polyvinylpyrolidine, polysaccharides.

7. Procédé selon l'une des revendications 1 à 6, **caractérisé en ce que** l'on utilise comme bloc A, un oxyde de polyéthylène (PEO).

8. Procédé selon l'une des revendications 1 à 6, **caractérisé en ce que** l'on utilise un bloc A dans lequel les motifs monomères se trouvent dans un ordre quelconque.

9. Procédé selon l'une des revendications 1 à 8, **caractérisé en ce que** l'on utilise des blocs A dans lesquels les motifs monomères possèdent une séquence stochastique.

10. Procédé selon l'une des revendications 1 à 9, **caractérisé en ce que** le bloc B est soluble dans l'huile, l'huile contenant au moins un composant d'huile de silicone.

11. Procédé selon l'une des revendications 1 à 10, **caractérisé en ce que** les éléments monomères du bloc B comprennent au moins quatre atomes de carbone.

12. Procédé selon la revendication 11, **caractérisé en ce que** les motifs monomères du bloc B possèdent au moins un composant du groupe comprenant l'oxyde de butylène, l'oxyde de pentylène et l'oxyde d'hexylène et autres oxydes d'alkylène, qui possèdent au moins 4 atomes de carbone.

13. Procédé selon l'une des revendications 1 à 10, **caractérisé en ce que** l'on utilise un bloc B qui contient comme motif monomère, de l'oxyde d'éthylène ou de l'oxyde de propylène, la solubilité dans l'huile correspondant en outre à la revendication 10.

14. Procédé selon l'une des revendications 1 à 10, **caractérisé en ce que** l'on utilise un bloc B qui est un polydiène, un polydiène partiellement ou complètement hydrogéné présentant une proportion au plus de 50 % de microstructure 1,4 dans le polydiène ou dans le polydiène de base.

15. Procédé selon la revendication 14, **caractérisé en ce que** l'on utilise un bloc B qui est un polydiène, un polydiène partiellement ou complètement hydrogéné présentant une proportion au plus de 25 % de microstructure 1,4 dans le polydiène ou dans le polydiène de base.

16. Procédé selon la revendication 14 ou 15, **caractérisé en ce que** l'on utilise un bloc B qui est un polydiène, un polydiène partiellement ou complètement hydrogéné présentant une proportion au plus de 10 % de microstructure 1,4 dans le polydiène ou dans le polydiène de base.

17. Procédé selon l'une des revendications 1 à 16, **caractérisé en ce que** l'on utilise un bloc B qui est un polybutadiène et/ou un polyisoprène et/ou un polybutadiène ou polyisoprène partiellement ou complètement hydrogéné.

18. Procédé selon l'une des revendications 1 à 16, **caractérisé en ce que** l'on utilise comme bloc B, un polyalcane qui n'a pas été produit par hydrogénation d'un polydiène.

19. Procédé selon l'une des revendications 1 à 18, **caractérisé en ce que** l'on utilise comme copolymère en bloc au moins un composant du groupe de l'un des composés présentant la structure selon le motif AB, ABA, BAB, (AB) n-étoile ou (BA)n-étoile.

20. Procédé selon l'une des revendications 1 à 19, **caractérisé en ce que** le bloc B est soluble dans les huiles de silicone pures.

21. Procédé selon l'une des revendications 1 à 20, **caractérisé en ce que** le bloc A a un poids moléculaire entre 500 g/mole et 100 000 g/mole.

22. Procédé selon l'une des revendications 1 à 21, **caractérisé en ce que** le bloc B a un poids moléculaire entre 500

g/mole et 100 000 g/mole.

**23.** Procédé selon l'une des revendications 1 à 22, **caractérisé en ce que** l'on utilise comme huile de silicone, du polydiméthylsiloxane.

**24.** Procédé selon la revendication 23, **caractérisé en ce que** l'huile de silicone possède en moyenne au maximum 10 motifs de diméthylsiloxane.

**25.** Mélange de tensioactif - huile contenant en tant qu'au moins un composant, une huile de silicone, **caractérisé en ce qu'**il contient comme additif, un copolymère en bloc selon l'une des revendications 1 à 24.

**26.** Système de substances selon la revendication 25, **caractérisé en ce qu'**il est un composant d'une microémulsion.

**27.** Utilisation des substances selon les revendications 25 et 26 comme composants de produits de soins capillaires et de soins corporels et de cosmétiques tels que déodorants, produits de soins cutanés, crèmes solaires, lotions, shampooings, gels douche, additifs de bain, lubrifiants, agents de démoulage, anti-agglomérants, produits phytosanitaires, médicaments, agents de soin textile et auxiliaires de soin textile, agents de soin du cuir et des peaux, agent d'entretien de véhicules, agents de nettoyage et de polissage, lessives et détergents.

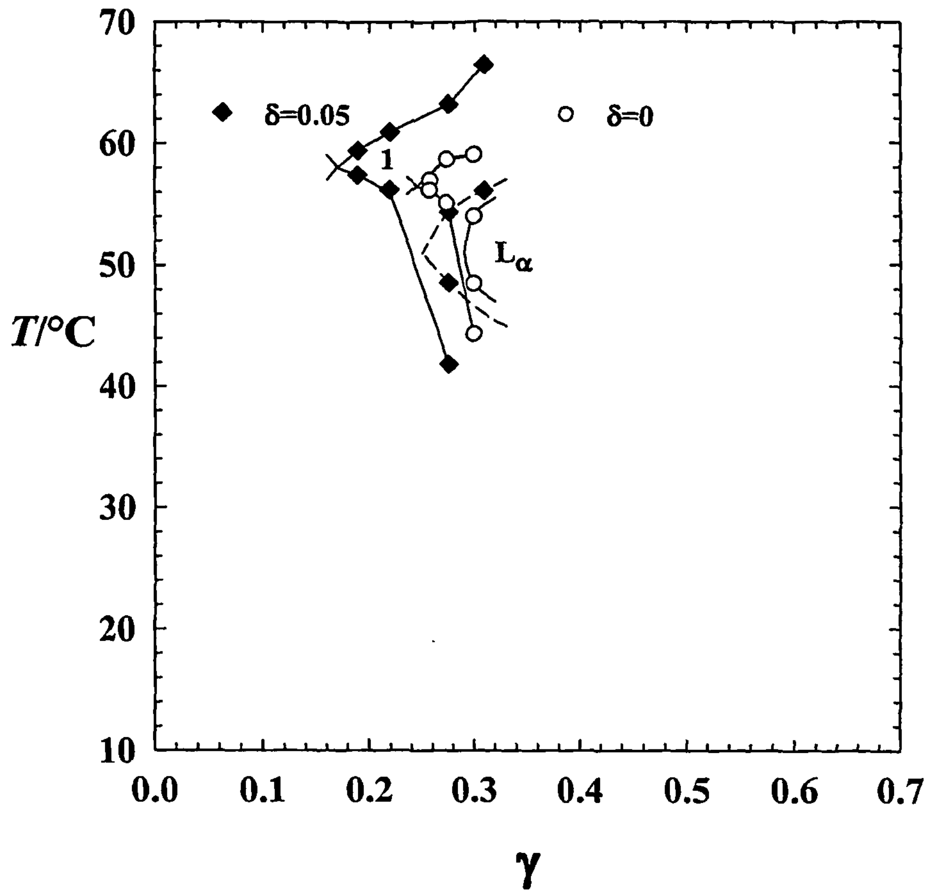


Fig. 1

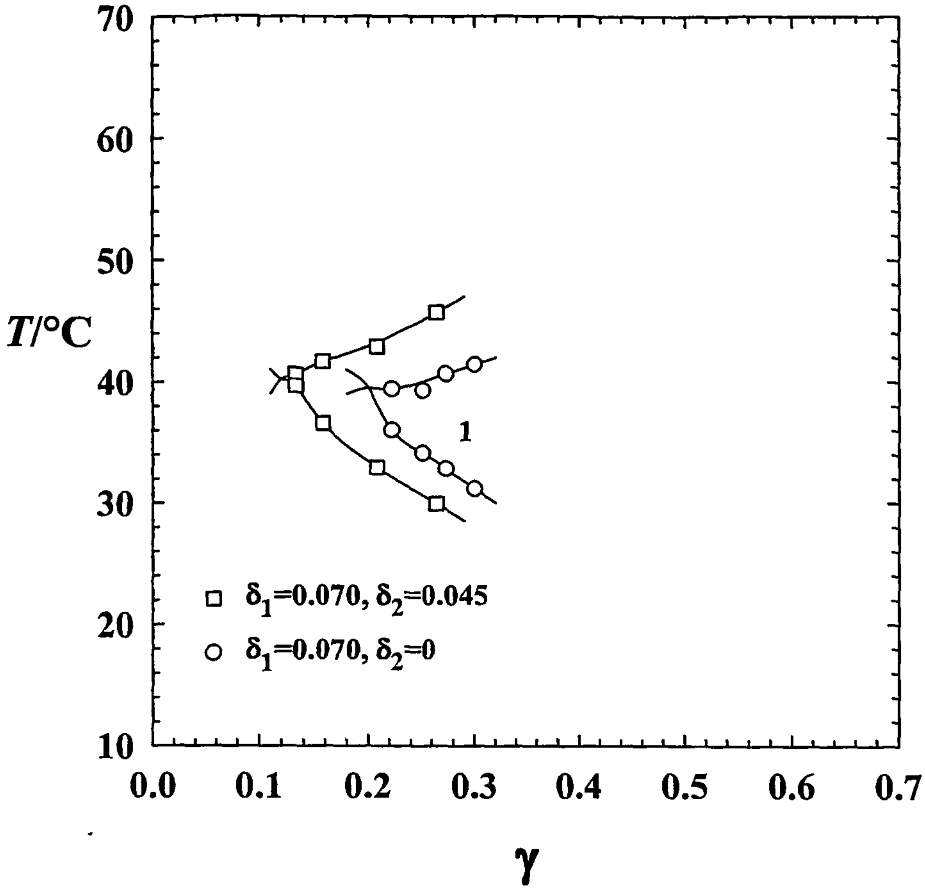
70
60
50
40
30
20
10
T/°C
0.0
0.1
0.2
0.3
0.4
0.5
0.6
0.7
γ
1
δ1=0.070, δ2=0.045
δ1=0.070, δ2=0

Fig. 2

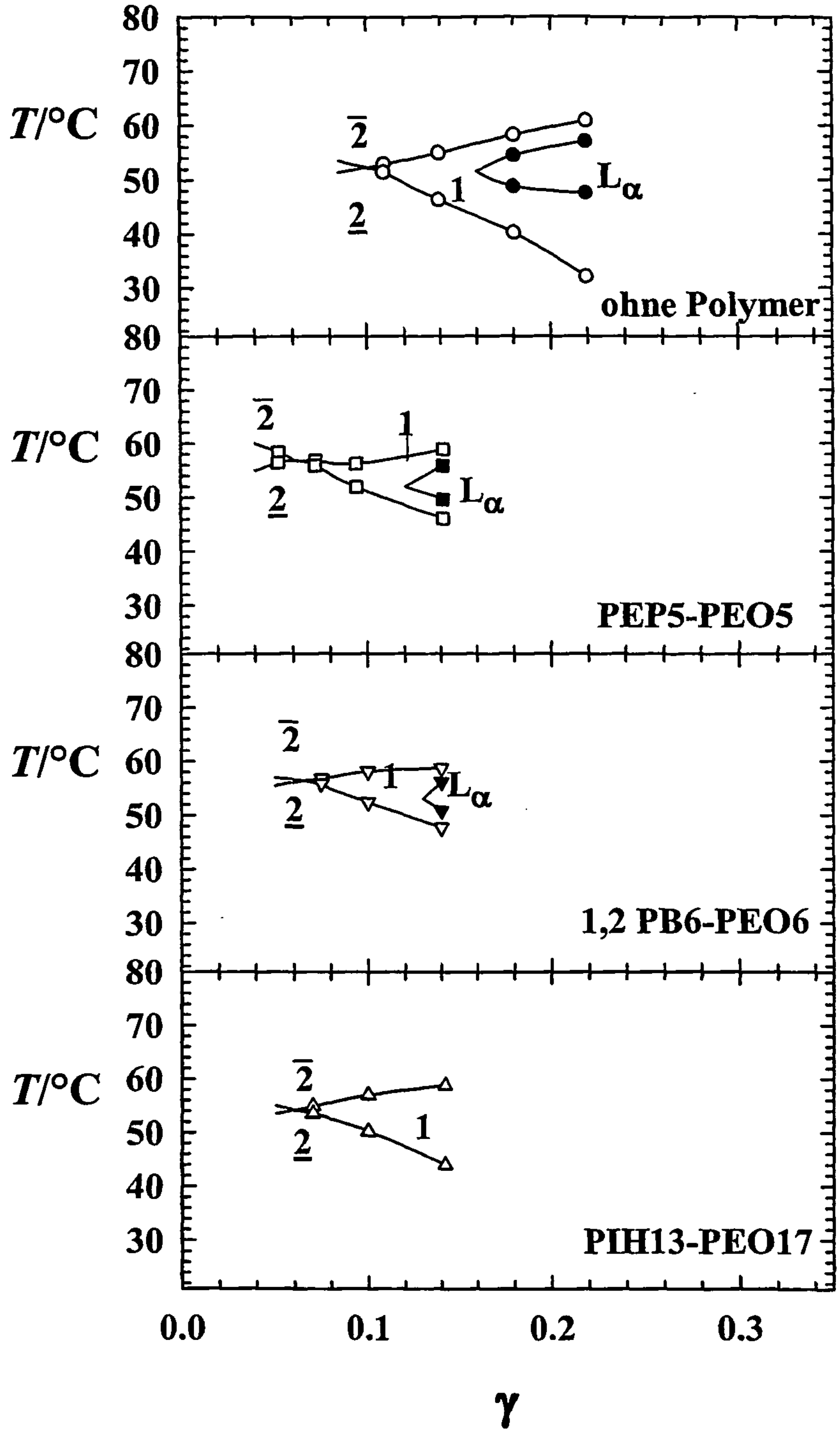
80
70
60
50
40
30
T/°C
2̄
2
1
Lα
ohne Polymer
PEP5-PEO5
1,2 PB6-PEO6
PIH13-PEO17
0.0
0.1
0.2
0.3
γ

Fig. 3

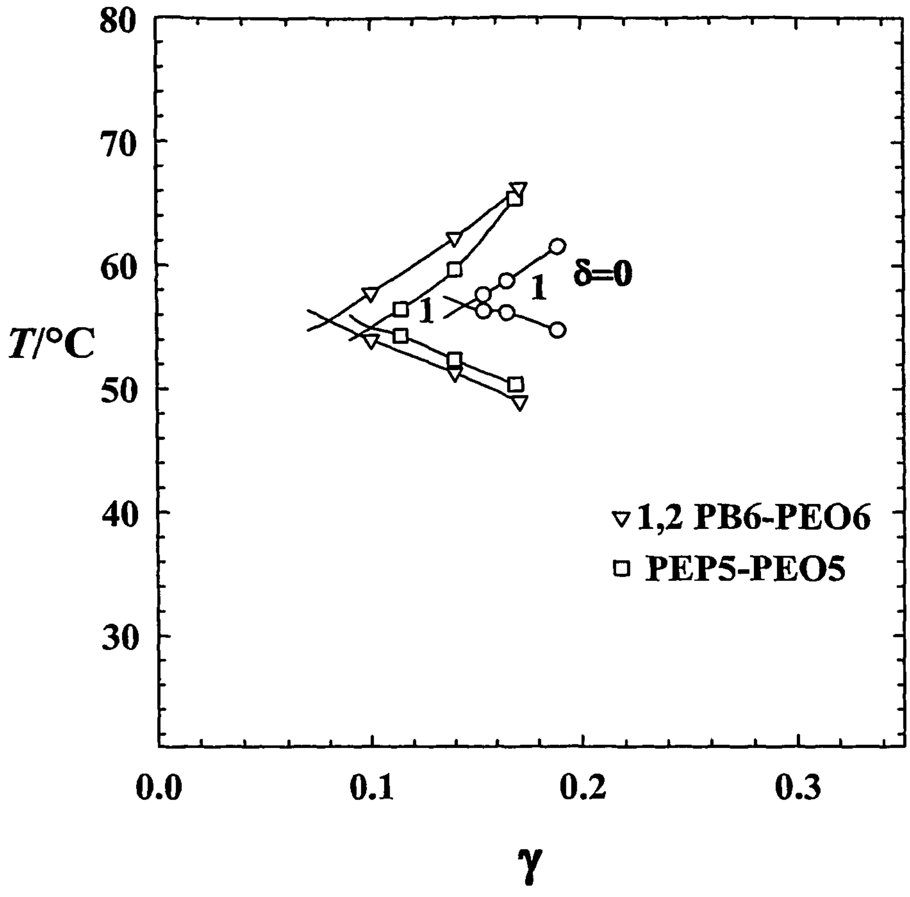


Fig. 4

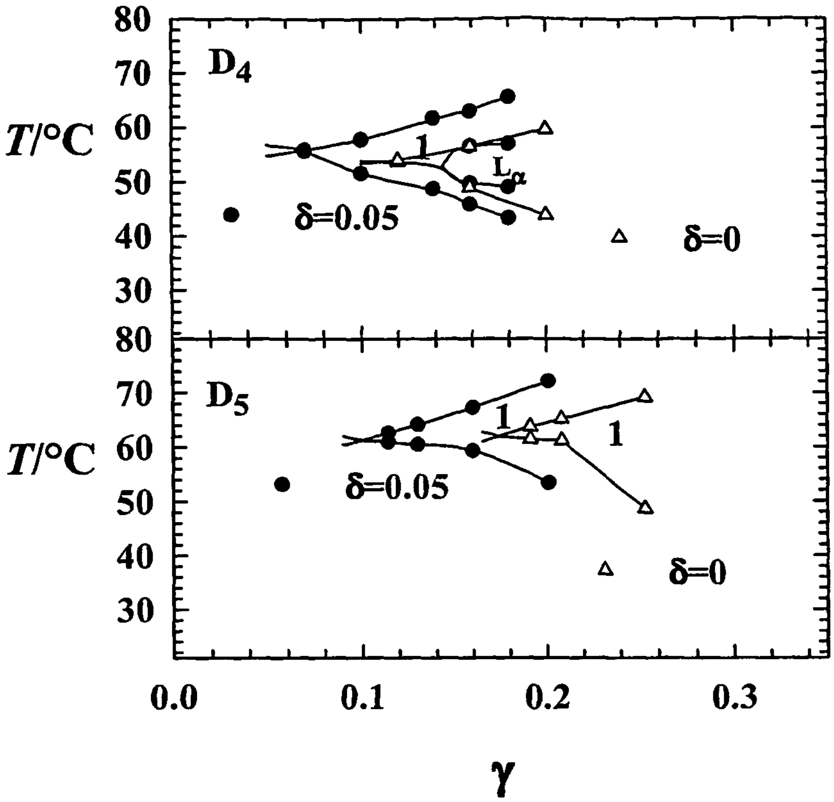

T/°C
80
70
60
50
40
30
D4
1
Lα
δ=0.05
δ=0
T/°C
80
70
60
50
40
30
D5
1
1
δ=0.05
δ=0
0.0
0.1
0.2
0.3
γ


Fig. 5

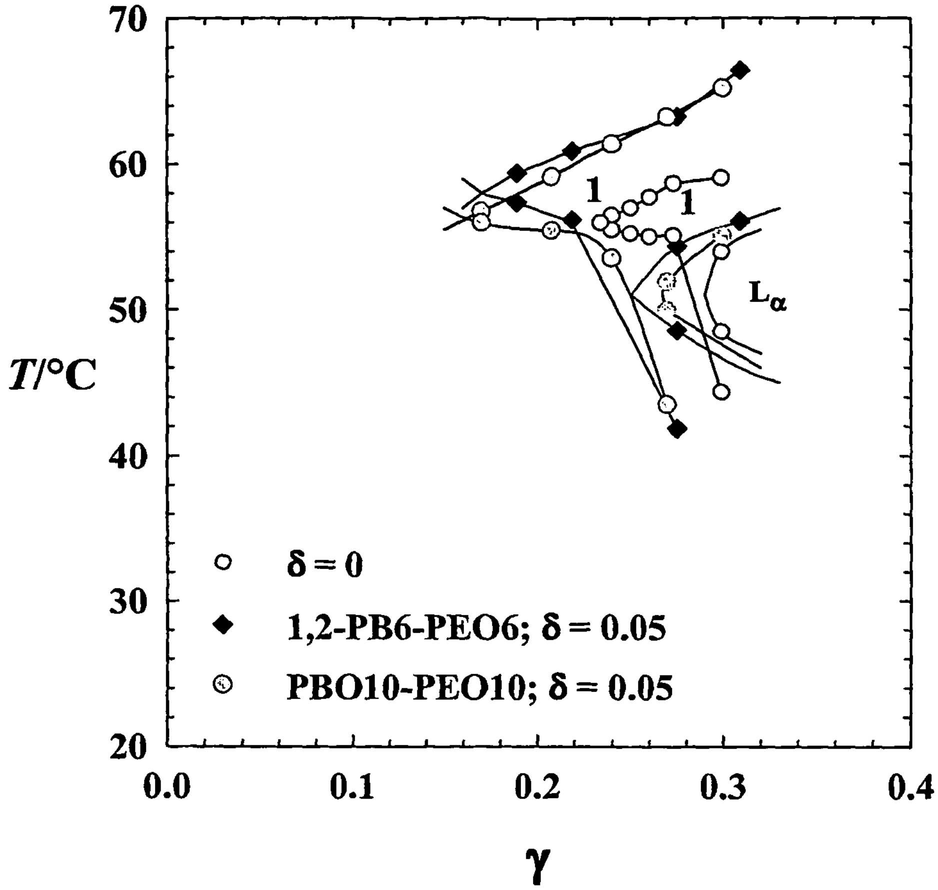
70
60
50
40
30
20
T/°C
0.0
0.1
0.2
0.3
0.4
γ
1
1
Lα
δ = 0
1,2-PB6-PEO6; δ = 0.05
PBO10-PEO10; δ = 0.05

Fig. 6

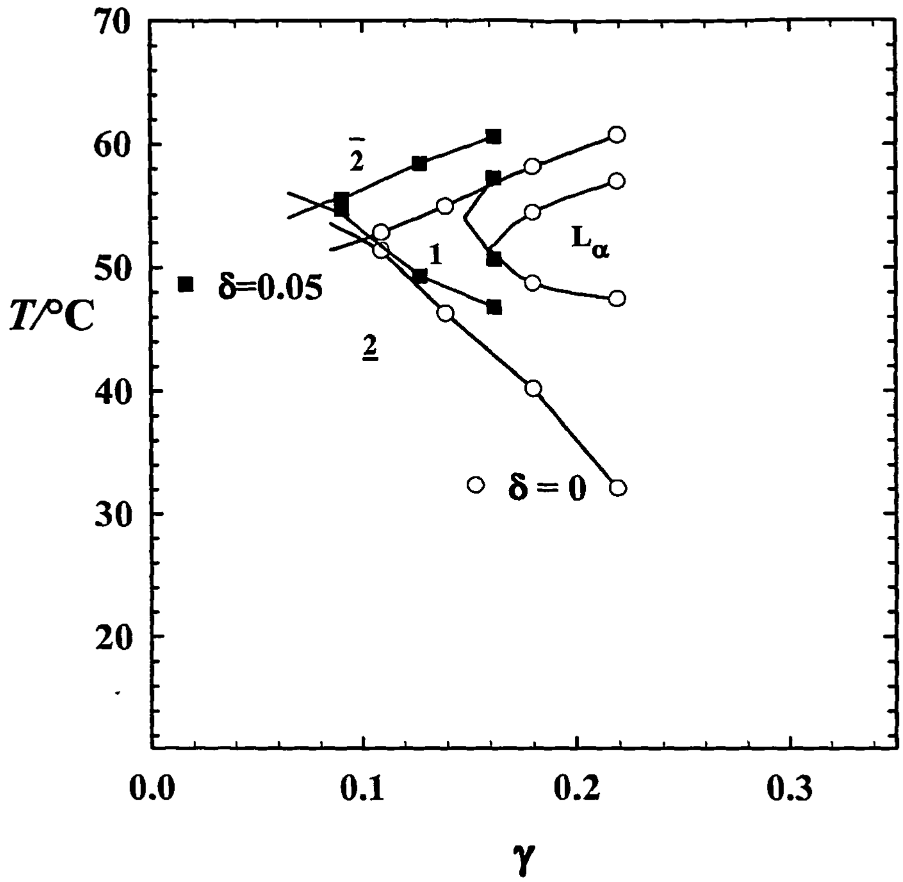


Fig. 7

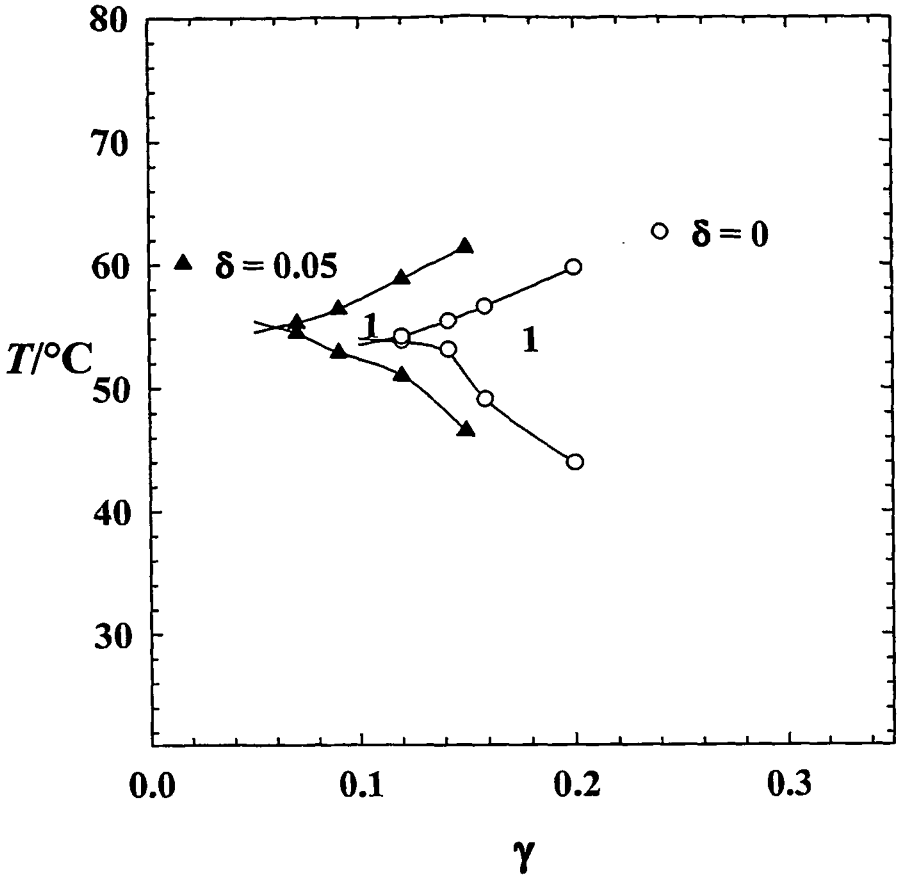


Fig. 8

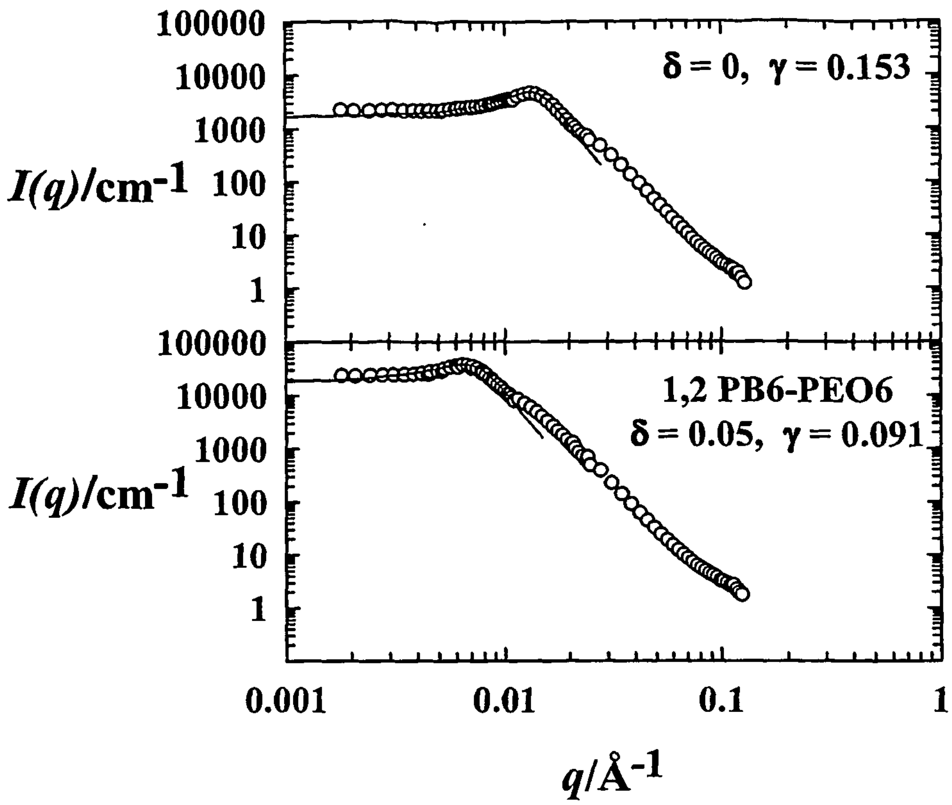
100000
10000
1000
I(q)/cm-1 100
10
1
δ = 0, γ = 0.153
100000
10000
1000
I(q)/cm-1 100
10
1
1,2 PB6-PEO6
δ = 0.05, γ = 0.091
0.001
0.01
0.1
1
q/Å-1

Fig. 9

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 5705562 A
- US 5707613 A
- EP 0789610 A1
- US 6616934 B
- US 20030040571 A1
- US 6013683 A
- US 6071975 A
- EP 1221455 A1
- US 5518716 A
- US 5661215 A
- US 5684085 A
- US 6207781 B1
- US 6201091 B1
- US 5017297 A
- US 5891954 A
- DE 19839054841

### In der Beschreibung aufgeführte Nicht-Patentliteratur

- **M. Teubner ; R. Strey.** *J. Chem. Phys.,* 1987, vol. 87, 3195